(19) **Europäisches Patentamt**

**European Patent Office**

**Office européen des brevets**

(11) Veröffentlichungsnummer: **0 279 261 B1**

(12) **EUROPÄISCHE PATENTSCHRIFT**

(45) Veröffentlichungstag der Patentschrift: **04.11.92**

(51) Int. Cl.$^5$: **C08G 77/442**

(21) Anmeldenummer: **88101377.5**

(22) Anmeldetag: **01.02.88**

(54) **Teilchenförmige Mehrphasenpolymerisate.**

(30) Priorität: **14.02.87 DE 3704657**

(43) Veröffentlichungstag der Anmeldung:
**24.08.88 Patentblatt 88/34**

(45) Bekanntmachung des Hinweises auf die
Patenterteilung:
**04.11.92 Patentblatt 92/45**

(84) Benannte Vertragsstaaten:
**BE DE FR GB IT NL**

(56) Entgegenhaltungen:
**WO-A-86/03208**
**DE-A- 2 856 836**
**GB-A- 835 074**
**US-A- 3 674 891**

(73) Patentinhaber: **BAYER AG**

**W-5090 Leverkusen 1 Bayerwerk(DE)**

(72) Erfinder: **Damrath, Volker, Dr.**
**Dierath 26**
**W-5093 Burscheid(DE)**
Erfinder: **Lindner, Christian, Dr.**
**Riehler Strasse 200**
**W-5000 Köln 60(DE)**
Erfinder: **Kress, Hans-Jürgen, Dr.**
**Mobay Corporation Mobay Road**
**Pittsburgh, PA 15205(US)**
Erfinder: **Wittmann, Dieter, Dr.**
**Doeperhofstrasse 15**
**W-4150 Krefeld(DE)**

EP 0 279 261 B1

**Beschreibung**

Die vorliegende Erfindung betrifft teilchenförmige emulgierte Mehrphasenpolymerisate mit Kern-Mantel-Struktur sowie ein Verfahren zu ihrer Herstellung. Das Polymerisat besteht aus einem organischen, kautschukartigen Polymer als Kern und einem Hüllenpolymerisat aus Organopolysiloxan.

Derartige Mehrphasenpolymerisate können als Überzugs- und Imprägnierungsmaterialien sowie als Kautschukrohstoffe Verwendung finden.

Organische kautschukartige Polymerisate aus mindestens einem olefinisch ungesättigten polymerisierbaren Monomeren zeigen trotz ihrer guten Kautschukeigenschaften in vielen Anwendungsbereichen unzureichende Eigenschaften, Nachteilig kann vor allem die geringe Beständigkeit gegen Sauerstoff, Wasser und Wasserdampf sein bzw. ein ungenügendes Hoch- und Tieftemperaturverhalten.

Wo 86/03208 beschreibt Kern-/Mantel-Teilchen, die durch Emulsionspolymerisation hergestellt werden, bei denen Kern und Mantel jeweils aus C-organischem Material bestehen und der Mantel zusätzlich Farbkörper enthalten kann.

DE 2 856 836 beschreibt Pfropfpolymerisate aus teilweise oder vollständig verseiften Vinylester-Homo- oder Copolymeren als Pfropfsubstraten und aufgepfropften Siloxaneinheiten.

Organopolysiloxane zeichnen sich durch hohe Wärmeformbeständigkeit und Kältefestigkeit aus. Daneben sind sie korrosionsbeständig und wasserabweisend.

Es wurde nun gefunden, daß man emulgierte teilchenförmige hoch-, teil- oder unvernetzte organische, kautschukartige Polymerisate derart mit Organopolysiloxanen umhüllen kann, daß es zur Ausbildung von Kern-Mantel-Strukturen kommt. Es wurde weiterhin gefunden, daß derartige Mehrphasenpolymerisate eine besondere gute Kombination von Eigenschaften aufweisen und als Überzugs- und Imprägnierungsmaterialien oder als Kautschukrohstoffe eingesetzt werden können.

Gegenstand der Erfindung sind teilchenförmige emulgierte Mehrphasenpolymerisate aus einem Kern (A), der ein organisches, kautschukartiges Polymerisat auf Basis olefinisch ungesättigter, polymerisierbarer Monomerer darstellt, und einer Hülle (B), die ein Homo- oder Mischpolymerisat von Organosiloxanen darstellt.

Das Gewichtsverhältnis das Kerns (A) zu der Hülle (B) beträgt vorzugsweise 0,1 zu 99,9 bis 90 zu 10, bevorzugt 10 zu 9 bis 50 zu 50. Die erfindungsgemäßen Mehrphasenpolymerisate haben mittlere Teilchendurchmesser ($d_{50}$) von 0,05 bis 10 $\mu$m, bevorzugt 0,1 bis 2 $\mu$m. Besonders bevorzugte Teilchendurchmesser sind 0,1 bis 1 $\mu$m.

Die Kerne (A), im Sinne der Erfindung aus organischem, kautschukartigem Polymerisat mit Erweichungstemperaturen (Glastemperaturen) kleiner 0°C, insbesondere kleiner -20°C, besonders kleiner -40°C, besitzen selbst mittlere Teilchengrößen ($d_{50}$) im Bereich von 0,05 bis 2 $\mu$m, insbesondere im Bereich von 0,09 bis 0,5 $\mu$m. Sie können bestehen aus unvernetztem Polymer, teilvernetztem Polymer oder hochvernetztem Polymer; bevorzugt sind Teilchen aus wenigstens teilvernetztem Polymer. Das Kernmaterial (A) stellt ein kautschukartiges Homo- oder Interpolymerisat aus wenigstens einem olefinisch ungesättigten polymerisierbaren Monomeren dar, insbesondere aus der Reihe der Dienmonomeren wie Butadien, Isopren, Chloropren, der Olefine wie Ethylen, der Vinylester wie Vinylacetat oder Vinylpropionat, der Alkylacrylate wie Ethyl-, Butyl-, Hexylacrylat, die zur Bildung eines kautschukartigen Polymeren, gegebenenfalls auch mit anderen Monomeren wie Styrol, Acrylnitril, Alkylmethacrylat, Acrylsäure, Methacrylsäure, Acrylamiden, $\alpha$-Methylstyrolen copolymerisiert sein können; bevorzugte Kernmaterialien sind Olefinkautschuke oder Alkylacrylatkautschuke.

Das Material der Hülle (B) ist ein Homo- oder Interpolymerisat von Organosiloxanen, die im wesentlichen aus Einheiten der allgemeinen Formel

$$R_n SiO_{\frac{4-n}{2}} \qquad (I)$$

aufgebaut sind, wobei R einen einwertigen organischen Rest darstellt und n einen Durchschnittswert von 1 bis weniger als 3 hat.

R kann ein einwertiger gesättigter oder ungesättigter Kohlenwasserstoffrest mit 1 bis 18 C-Atomen sein, z.B. Methyl, Ethyl, Phenyl etc. Des weiteren kann R auch einen einwertigen radikalisch angreifbaren Kohlenwasserstoffrest darstellen, insbesondere Vinyl, Allyl, Chloralkyl, Mercaptoalkyl, Acryloxypropyl etc.

EP 0 279 261 B1

Bevorzugt ist, daß mindestens 80 % aller Reste R Methylgruppen sind.

Ein weiterer Gegenstand der Erfindung ist ein Verfahren zur Herstellung der erfindungsgemäßen Mehrphasenpolymerisate.

In einer ersten Stufe wird eine Emulsion des Kernmaterials (A) hergestellt:

Die Herstellung erfolgt nach an sich bekannten Verfahren durch Emulsionspolymerisation wenigstens eines Mononeren, insbesondere durch wäßrige, radikalische Emulsionspolymerisationstechnologie. Bei diesem Verfahren werden Monomere in Gegenwart oberflächenaktiver Stoffe und gegebenenfalls Initiatoren in Emulsion polymerisiert. Durch Variation der Polymerisationsbedingungen lassen sich die Teilchengrößen der Polymerisate steuern und im gewünschten Sinne einstellen. Die Emulsionspolymerisationen werden normalerweise bei Temperaturen von 10 bis 100°C durchgeführt. Bevorzugte Emulsionen, enthaltend die Kerne (A) im Sinne der Erfindung, besitzen einen pH-Wert kleiner 7 und werden mittels anionischer Emulgatoren, insbesondere auf der Basis von Salzen von Sulfonsäuren oder organischen Sulfaten hergestellt. Durch Einstellung von bestimmten Monomer/Emulgator/Wasser-Verhältnissen lassen sich die Teilchengrößen der anfallenden Latices steuern. Sind die Kerne im Sinne der Erfindung wenigstens teilvernetzt, so können die den Kern bildenden Monomeren in Anwesenheit wenigstens eines polyfunktionellen Vinyl- oder Allylmonomeren polymerisiert werden, insbesondere in Mengen von bis zu 5 Gew.-%, bezogen auf die Monomeren. Derartige vernetzende, polyfunktionelle Monomere sind weit bekannt, wie z.B. Divinylbenzol, Bis-acrylate, Bis-acrylamide, Acrylsäurevinylester, Triallylcyanurat, -isocyanurat, -phosphat, -citrat, Butadien, Isopren.

In der zweiten Stufe des erfindungsgemäßen Verfahrens wird in Gegenwart der Polymerisatemulsion der ersten Stufe das Organopolysiloxan für die Hülle (B) durch Emulsionspolymerisation hergestellt, indem man niedermolekulare Organosiloxane in dem Latex aus Stufe 1 dispergiert und (gegebenenfalls in Gegenwart einer zum Erhalt einer stabilen Emulsion benötigten Menge Emulgator sowie eines Katalysators) polymerisiert. Dabei ist eine der Polymerisation vorangestellte Emulgierung der grob dispergierten Organosiloxane mit technischen Hilfsmitteln wie z.B. schnellaufenden Rührwerken (Ultra-TURRAX®, Fa. Jahnkez Kunkel, Staufen), Kolloidmühlen oder Hochdruckhomogenisatoren nicht erforderlich. Vielmehr ist bevorzugt, daß Emulgierung und Polymerisation gleichzeitig erfolgen. Dadurch wird überraschenderweise erreicht, daß das gebildete Organopolysiloxan erfindungsgemäß auf das in der ersten Stufe hergestellte Kernmaterial (A) aufpolymerisiert. Zur Erhöhung der Polymerisationsgeschwindigkeit kann die Reaktionstemperatur auf etwa 40 bis 100° C angehoben werden.

Die Teilchengrößen der erfindungsgemäßen Mehrphasenpolymerisate lassen sich durch Variation der Polymerisationsbedingungen steuern und in gewünschtem Sinne einstellen. Durch Verwendung nichtionischer Coemulgatoren und Einstellung bestimmter Emulgator/Organosiloxan-Verhältnisse sowie durch die Wahl von Kernmaterialien mit geeigneten Teilchendurchmessern lassen sich die Teilchengrößen der Mehrphasenpolymerisate besonders gut steuern.

Nach beendeter Polymerisation kann das teilchenförmige Mehrphasenpolymerisat durch Brechen der Emulsion auf beliebige Weise, z.B. durch Zugabe von Salzen wie Natriumchlorid, durch Verdampfen des Wassers oder durch Zugabe wasserlöslicher Alkohole, wie Methanol, Ethanol oder Isopropanol in modifizierter Form erhalten werden. Erfolgt das Brechen der Emulsion durch Zugabe von Salzen oder von Alkohol, erhält man das Mehrphasenpolymerisat praktisch katalysatorfrei. Das Mehrphasenpolymerisat kann aber auch in Emulsion weiterverarbeitet werden.

Als siliciumorganische Ausgangsverbindungen kann man die aus dem Stand der Technik bekannten Verbindungen einsetzen. Hierzu gehören vor allem cyclische Organosiloxanoligomere, wie z.B. Octamethylcyclotetrasiloxan oder Decamethylcyclopentasiloxan. Daneben sind Alkoxysilane oder Alkoxysiloxane geeignet, wobei die Alkoxygruppe 1 bis 4 Kohlenstoffatome enthalten soll. Beispiele geeigneter Alkoxysilane sind Methyltriethoxysilan, 3-Aminopropyltrimethoxysilan und 3-Mercaptopropylmethyldimethoxysilan.

Für das erfindungsgemäße Verfahren sind ferner Polysiloxane, insbesonder $\alpha,\beta$-Polysiloxandiole, eines Molekulargewichtes von 2000 bis 5000 und einer Viskosität von 50 bis 150 mPa.s bei 25° C geeignet.

Das Organopolysiloxan der Hülle (B) kann teilweise vernetzt sein. Der Einbau von Verzweigungen oder Vernetzungen kann durch Zugabe von z.B. Tetraethoxysilan oder eines Silans der allgemeinen Formel

R Si X$_3$     (II),

wobei X eine hydrolysierbare Gruppe, insbesondere den Alkoxyrest darstellt, erfolgen. R hat die im Vorhergehenden beschriebene Bedeutung. Bevorzugt sind R = Methyl und R = Phenyl. Eine Vernetzung kann jedoch auch stattfinden, wenn z.B. gleichzeitig eingesetzte Vinyl-und Mercaptogruppen bei der Emulsionspolymerisation der Siloxanbestandteile miteinander reagieren; so daß die Zugabe eines externen Vernetzers nicht erforderlich ist. Die Organopolysiloxane der Hülle (B) können auch zusätzlich anorganische

3

Füllstoffe enthalten, wie z.B. SiO₂, Talkum und dergleichen.

Als Emulgatoren werden die aus dem Stand der Technik bekannten nichtionogenen und/oder anionenaktiven Emulgatoren verwendet.

Beispiele für nichtionogene Emulgatoren sind Anlagerungsprodukte von Ethylenoxid an Verbindungen mit azidem Wasserstoff, wie Fettalkohole, Fettsäuren und dergleichen. Der HLB-Wert der Emulgatoren ist so auszuwählen, daß er in dem Bereich liegt, in dem die Bildung von O/W-Emulsionen begünstigt ist. Im allgemeinen werden Emulgatoren eines HLB-Wertes ≧ 10 verwendet. Geeignete nichtionogene Emulgiermittel sind z.B. POE (3)-Laurylalkohol, POE (20)-Oleylalkohol, POE (7)-Nonylphenol der POE (10)-Stearat. Die Schreibweise POE (3)-Laurylalkohol bedeutet, daß an ein Molekül Laurylalkohol 3 Einheiten Ethylenoxid angelagert sind, wobei die Zahl 3 einen Mittelwert darstellt.

Als anionenaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele hierfür sind das Natriumsalz der Dodecylbenzolsulfonsäure oder der Laurylsulfonsäure. Es ist natürlich auch möglich, Mischungen von nichtionogenen Emulgatoren mit anionenaktiven Emulgatoren zu verwenden.

Als Katalysatoren werden in Übereinstimmung mit dem Stand der Technik Säuren verwendet. Insbesondere sind solche Säuren geeignet, die grenzflächenaktiv sind.

Beispiele solcher Katalysatoren sind Sulfonsäuren wie die Alkylsulfonsäuren oder Alkylarylsulfonsäuren, z.B. Dodecylbenzolsulfonsäure. Wenn auch grundsäztlich alle aus dem Stand der Technik bekannten Säuren als Katalysator verwendet werden können, so sind die grenzflächenaktiven Säuren bevorzugt.

Bei der Polymerisation der Hülle (B) muß die Bildung neuer Teilchen möglichst vollständig verhindert werden. Der Emulsionsstabilisator muß in einer zur Oberflächenbedeckung der Teilchen erforderlichen Menge vorhanden sein. Die Größe der Teilchen ist durch die Reaktionsführung in weiten Grenzen zu variieren. Verwendet man als Kern (A) einen agglomerierten Latex, um große Teilchen zu erhalten, so können diese mehrere Kautschuk-Partikel enthalten. Man kann die Polymerisation der Hülle (B) auch so führen, daß Partikel mit Kern-Mantel-Struktur und gleichzeitig Partikel aus reinem Organopolysiloxan erzeugt werden. Auch solche Mischungen können unter bezonderen Umständen Verwendung finden.

Die erfindungsgemäßen teilchenförmigen Mehrphasenpolymerisate können als Überzugs- und Imprägnierungsmaterialien sowie als Kautschuke eingesetzt werden.

Sie eignen sich ebenso zur Herstellung von Latexfarben. Die Emulsion kann z.B. mit Pigmenten und/oder anderen Füllstoffen vermischt und auf Oberflächen aufgetragen werden, auf denen nach Verdampfen des Wassers ein zusammenhängender Film zurückbleibt.

Die erfindungsgemäßen Mehrphasenpolymerisate zeichnen sich durch eine überraschend gute Kombination technisch relevanter Kunstoffeigenschaften aus und lassen weiterhin einen Einsatz anstelle von reinem Organopolysiloxan zu. Als solche Eigenschaften sind zu nennen: Alterungs- und Thermostabilität, Tieftemperaturzähigkeit, Oxidations- und Korrosionsbeständigkeit sowie auch eine hohe Wirtschaftlichkeit.

Der Gegenstand der vorliegenden Erfindung soll anhand der folgenden Beispiele noch näher erläutert werden.

Beispiele

1. Herstellung der Kernmaterialien

1.1 In einem Reaktor werden vorgelegt: 10 300 Tl. Wasser, 5 Tl. Na-Salz von C₁₄-C₁₈-Alkylsulfonsäuren, 800 Tl. n-Butylacrylat und 4 Tl. Triallylcyanurat. Nach Aufheizen auf 70°C wird die Polymerisation unter Rühren durch Zugabe einer Lösung von 30 Tl. Kaliumperoxodisulfat in 1000 Tl. Wasser initiiert. Anschließend werden innerhalb von 5 Stunden folgende Lösungen in den Reaktor bei 70°C eingespeist:

| Lösung 1 | |
| --- | --- |
| 9150 Tl. | n-Butylacrylat |
| 46 Tl. | Triallylcyanurat |

EP 0 279 261 B1

| Lösung 2 | |
|---|---|
| 7000 Tl. | Wasser |
| 200 Tl. | Na-Salz von $C_{14-18}$-Alkylsulfonsäuren |

Danach wird innerhalb von 4 Stunden bei 70°C auspolymerisiert. Es wird ein Latex erhalten, der einen Feststoff von 35,9 %, einen pH-Wert von 3,2 und eine mittlere Teilchengröße ($d_{50}$-Wert) von 0,18 $\mu$m aufweist. Das Polymerisat ist teilvernetzt und besitzt einen Gelgehalt von 89 %, gemessen in DMF.

1.2 In einem Reaktor werden unter Stickstoff vorgelegt:

| 9200 Tl. | Wasser |
|---|---|
| 120 Tl. | Na-Salz von $C_{14-18}$-Sulfonsäuren |
| 5000 Tl. | Butadien |
| 10 Tl. | Kaliumperoxodisulfat |
| 2 Tl. | Ethylendiamintetraessigsäure-Na-Salz |

Bei 60-65°C wird 25 Stunden polymerisiert, es wird ein Latex erhalten mit einem Feststoff von 35 %, einer mittleren Teilchengröße von 0,11 $\mu$m und einem pH-Wert von 3,7.

2. Herstellung der erfindungsgemäßen Mehrphasenpolymerisate

2.1 In einem Reaktor werden unter Stickstoff-Atmosphäre vorgelegt:

| 150 Tl. | Acrylatlatex (1.1) |
|---|---|
| 5 Tl. | Octamethylcyclotetrasiloxan |

Die Reaktionsmischung wird auf 85°C erwärmt und 2h gerührt.

Nach der Zugabe einer lösung von 1,3 Teilen Dodecylbenzolsulfonsäure in 139 Teilen Wasser wird eine Stunde bei 85°C nachgerührt, anschleißend werden 95 Teile Octamethylcyclotetrasiloxan innerhalb von zwei Stunden eindosiert.

Die Polymerisation wird in dem zunächst zweiphasigen Reaktionsgemisch unter Rühren und Beibehalten der Temperatur innerhalb von 24 Stunden zum Ende geführt. Die dabei gebildete stabile Emulsion wird auf Raumtemperatur abgekühlt. Sie enthält das Mehrphasenpolymerisat in einer Konzentration von 36 % (bestimmt nach DIN 53 216).

Die Teilchengröße beträgt 0,15 $\mu$m (bestimmt mit Laserstreulicht-Spektroskopie), die Teilchengrößenverteilung ist monomodal (k 2 = 0,04).

Das Polymerisat ist teilvernetzt und besitzt einen Gelgehalt von 33 % (gemessen in THF) und besteht aus 34 % Acrylatkautschuk und 66 % Organopolysiloxan. Aus der Emulsion läßt sich durch Verdampfen des Wassers ein klebriger, weicher Film bilden, der auf Glas eine ausgezeichnete Haftung bezitzt.

2.2 In einem Reaktor werden unter Stickstoffatmosphäre vorgelegt:

| 200 Tl. | Acrylatlatex (1.1) |
|---|---|
| 5 Tl. | Octamethylcyclotetrasiloxan |

Die Reaktionsmischung wird auf 85°C erwärmt und zwei Stunden gerührt.

Nach Zugabe einer Losung von 1,5 Teilen Dodecylbenzolsulfonsäure und 1,5 Teilen $C_{12-14}$-Alkylsulfonsäure-Natriumsalz in 125 Teilen Wasser wird eine Stunde bei 85°C nachgerührt. Anschließend wird eine Mischung aus 95 Teilen Octamethylcyclotetrasiloxan, 2,5 Teilen Tetramethyltetravinylcyclotetrasiloxan innerhalb von 2 Stunden eindosiert, die Polymerisation wie in Beispiel 2.1 zu Ende geführt und die gebildete stabile Emulsion auf Raumtemperatur abgekühlt. Sie enthält das Mehrphasenpolymerisat in einer Konzentration von 36 %. Die Teilchengröße beträgt 0,15 $\mu$m, die Teilchengrößenverteilung ist monomodal (k 2 = 0,02). Das Polymerisat ist teilvernetzt, der Gelgehalt beträgt 87 %.

Es besteht aus 40 % Acylatkautschuk und 60 % Organopolysiloxan. Aus der Emulsion läßt sich durch Verdampfen des Wassers ein klebfreier, translucenter Film bilden, der eine ausgezeichnete Glashaftung besitzt.

**Patentansprüche**

1. Teilchenförmige emulgierte Mehrphasenpolymerisate, bestehend aus einem Kern (A) aus organischem, kautschukartigem Polymerisat auf Basis olefinisch ungesättigter Monomerer mit Erweichungstemperaturen (Glastemperaturen) kleiner 0°C und einem Hüllenpolymerisat (B) aus Organopolysiloxan.

2. Teilchenförmige Mehrphasenpolymerisate nach Anspruch 1, in denen das Gewichtsverhältnis von (A) zu (B) 0,1 zu 99,9 bis 90 zu 10 beträgt.

3. Teilchenförmige Mehrphasenpolymerisate nach Anspruch 1 oder 2, dadurch gekennzeichnet, daß sie mittlere Teilchendurchmesser von 0,05 bis 10 $\mu$m ($d_{50}$-Werte) besitzen.

4. Teilchenförmige Mehrphasenpolymerisate nach einem der Ansprüche 1 bis 3, dadurch gekennzeichnet, daß die Kerne (A) eine mittlere Größe von 0,05 bis 2 $\mu$m ($d_{50}$-Werte) aufweisen.

5. Verfahren zur Herstellung teilchenförmiger Mehrphasenpolymerisate gemäß einem der Ansprüche 1 bis 4, dadurch gekennzeichnet, daß man in einer ersten Stufe durch Emulsionspolymerisation ein organisches, kautschukartiges Polymerisat in Latexform herstellt und danach in einer zweiten Stufe die Teilchen der ersten Stufe mit einer Hülle (B) aus Organopolysiloxan umgibt, indem man niedermolekulare Organosiloxane in Anwesenheit der Latexteilchen der ersten Stufe polymerisiert.

**Claims**

1. Particulate emulsified multiphase polymerizates, consisting of a core (A) of organic, rubber-like polymerizate based on olefinically unsaturated monomers with softening temperatures (glass temperatures) less than 0 °C and a shell polymerizate (B) of organopolysiloxane.

2. Particulate multiphase polymerizates according to Claim 1, in which the weight ratio of (A) to (B) is from 0.1:99.9 to 90:10.

3. Particulate multiphase polymerizates according to Claim 1 or 2, characterized in that they have mean particle diameters ($d_{50}$ values) of 0.05 to 10 $\mu$m.

4. Particulate multiphase polymerizates according to one of Claims 1 to 3, characterized in that the cores (A) have a mean size ($d_{50}$ values) of 0.05 to 2 $\mu$m.

5. A process for production of particulate multiphase polymerizates according to one of Claims 1 to 4, characterized in that in a first stage an organic rubber-like polymerizate in latex form is produced and after that in a second stage the particles of the first stage are surrounded with a shell (B) of organopolysiloxane by polymerizing low-molecular organosiloxanes in presence of the latex particles of the first stage.

**Revendications**

1. Polymères polyphasiques émulsionnés en particules composés d'un noyau (A) en polymère caoutchouteux organique à base de monomère oléfiniquement insaturé avec des températures de ramollissement (températures de verre) inférieures à 0°C et un polymère d'enveloppe (B) en polysiloxane organique.

2. Polymères polyphasiques en particules selon la revendication 1,dans lesquels le rapport pondéral de (A) / (B) est de l'ordre de 0,1 pour 99,9 à 90 pour 10.

3. Polymères polyphasiques en particules selon la revendication 1 ou 2, caractérisés en ce qu'ils possèdent un diamètre moyen des particules de 0,05 à 10 $\mu$m (valeur $d_{50}$).

4. Polymères polyphasiques en particules selon une des revendications 1 à 3,caractérisés en ce que les noyaux (A) présentent une taille moyenne de 0,05 à 2 $\mu$m (valeurs $d_{50}$).

5. Procédé de préparation de polymères polyphasiques en particules selon une des revendications 1 à 4, caractérisé en ce que, dans une première étape, un polymère caoutchouteux organique est préparé sous forme de latex par polymérisation en émulsion et, dans une deuxième étape, les particules de la première étape sont ensuite entourées d'une enveloppe (B) en polysiloxane organique, des siloxanes organiques de faible poids moléculaire étant polymérisés en présence des particules de latex de la première étape.